# DEMANDE DE BREVET EUROPEEN

(11) **EP 1 622 100 A1**
(43) Date de publication de la demande: **01.02.2006**
(21) Numéro de dépôt: 05291587.3
(22) Date de dépôt: 25.07.2005
(51) Int. Cl.: G07F 17/26, G03B 15/00

(54) **Installation de production de travaux photographiques**

(30) Priorité: 28.07.2004 FR 0408340
(71) Demandeur: Laboratoires Fujifilm SA, 78390 Bois d'Arcy (FR)
(72) Inventeur: Develay, Claude, 78720 Senlisse (FR)
(74) Mandataire: Blot, Philippe Robert Emile

(57) **Abrégé**

L'installation de production de travaux photographiques comporte des moyens (24A, 26A, 28A, 24B, 26B, 28B) de recueil d'une commande et de production de données de commande, et des moyens (16) de production des travaux photographiques à partir des données de commande.

Les moyens de recueil (12A, 12B) comportent des moyens (28A, 28B) d'identification d'un client passant commande, et les moyens (16) de production comportent des moyens (50) de détection des travaux photographiques ayant un niveau de qualité non satisfaisant.

Elle comporte :
- une base de données (64) comportant un solde courant d'unités de compte pour chaque client, des moyens (62) pour effectuer, après production, une valorisation des seuls travaux photographiques exécutés avec un niveau de qualité satisfaisant, et des moyens (62) pour décrémenter le solde courant du client identifié de la valorisation effectuée, seulement après exécution des travaux, et indépendamment de la commande recueillie.

## Description

La présente invention concerne une installation de production de travaux photographiques comportant :
- des moyens de recueil d'une commande et de production de données de commande, et
- des moyens de production des travaux photographiques à partir des données de commande.

De nos jours, les clients souhaitant obtenir des travaux photographiques tels que des impressions sur papier à partir de clichés contenus sur des supports argentiques ou numériques apportent le support dans une boutique où ils passent commande des travaux photographiques souhaités. Cette boutique transfère le support vers un laboratoire central qui réalise les travaux commandés. Les travaux effectués sont retournés auprès de la boutique et sont remis au client moyennant le paiement du prix.

Le paiement des travaux photographiques ainsi réalisés est effectué par le client, par exemple à l'aide de monnaie fiduciaire, c'est-à-dire en billets, ou encore à partir d'une carte de crédit permettant le débit du compte du client de la somme à payer.

Dans certains réseaux, seuls les travaux photographiques réussis, c'est-à-dire répondant à un standard de qualité minimale sont livrés et facturés au client. Ainsi, les photographies floues, mal cadrées ou totalement inexploitables ne sont pas imprimées et ne sont pas facturées au client, même si celui-ci avait passé commande d'un tel tirage, sans avoir connaissance de la piètre qualité du cliché d'origine.

Pour permettre la détermination du prix devant être payé, les travaux photographiques sont accompagnés d'une information concernant le nombre de tirages effectivement réalisés et devant être payés. Cette information est communiquée par exemple sur une étiquette imprimée apposée sur l'emballage des travaux photographiques. Sur cette même étiquette figure le prix que le client devra payer.

De nos jours, il est connu que les paiements puissent être effectués à partir de cartes de paiement dites "prépayées". Ces cartes de paiement sont achetées par le client moyennant une somme forfaitaire et sont associées à un solde correspondant permettant l'achat de produits ou services prédéterminés. Chaque fois q'un achat est effectué, le solde est débité d'une valeur correspondant au prix de l'achat.

Le recours à des cartes de paiement prépayées pour le règlement de travaux photographiques pourrait permettre de supprimer les encaissements de monnaie fiduciaire par la boutique en charge de la livraison des travaux photographiques. Toutefois, à partir de telles cartes, le règlement s'effectue lors de la commande des travaux photographiques, ce qui rend délicat la seule facturation des photographies réussies.

L'invention a pour but de proposer une installation de production de travaux photographiques permettant de simplifier les opérations devant être mises en oeuvre lors de la livraison des travaux photographiques, tout en permettant la seule facturation des travaux photographiques réussis.

A cet effet, l'invention a pour objet une installation de production de travaux photographiques du type précité, caractérisée en ce que les moyens de recueil comportent des moyens d'identification d'un client passant commande,
en ce que les moyens de production comportent des moyens de détection des travaux photographiques ayant un niveau de qualité non satisfaisant ;
et en ce qu'elle comporte :
- une base de données comportant un solde courant d'unités de compte pour chaque client ;
- des moyens pour effectuer, après production, une valorisation des seuls travaux photographiques exécutés avec un niveau de qualité satisfaisant ; et
- des moyens pour décrémenter le solde courant du client identifié de la valorisation effectuée, seulement après exécution des travaux, et indépendamment de la commande recueillie.

Suivant des modes particuliers de réalisation, l'installation comporte l'une ou plusieurs des caractéristiques suivantes :
- lesdits moyens d'identification d'un client comportent un support de données propre à chaque client et un lecteur de recueil de ces informations d'identification du client sur le support ;
- ledit support de données est une carte à mémoire ;
- elle comporte au moins une borne dans laquelle sont intégrés les moyens de recueil d'une commande et de production de données de commande et les moyens d'identification du client passant commande ;
- la ou chaque borne comporte un lecteur de recueil de données d'images numériques sur lesquelles doivent être effectués les travaux photographiques ;
- elle comporte un serveur de gestion dans lequel sont intégrés la base de données comportant un solde courant d'unités de compte pour chaque client, les moyens pour effectuer une valorisation et les moyens pour décrémenter le solde courant du client identifié de la valorisation effectuée ;
- la ou chaque borne et le serveur de gestion comportent des moyens de communication au travers d'un réseau collectif de transmission de données ;
- elle comporte des moyens de consultation de la base de données pour l'obtention du solde courant de chaque client ; et
- elle comporte :
   - des moyens de calcul d'une valorisation théorique de la commande, et
   - des moyens pour décrémenter le solde courant de la carte de ladite valorisation théorique pour obtenir un solde prévisionnel après recueil de la commande et avant production effective des travaux photographiques.

L'invention sera mieux comprise à la lecture de la description qui va suivre, donnée uniquement à titre d'exemple et faite en se référant aux dessins, sur lesquels :
- la figure 1 est une vue schématique de l'installation selon l'invention ;
- la figure 2 est un chronogramme des échanges d'informations ayant lieu entre les différentes entités de l'installation pour une opération de production de travaux photographiques ; et
- la figure 3 est un chronogramme des flux entre les différentes entités pour la mise à disposition de cartes des clients.

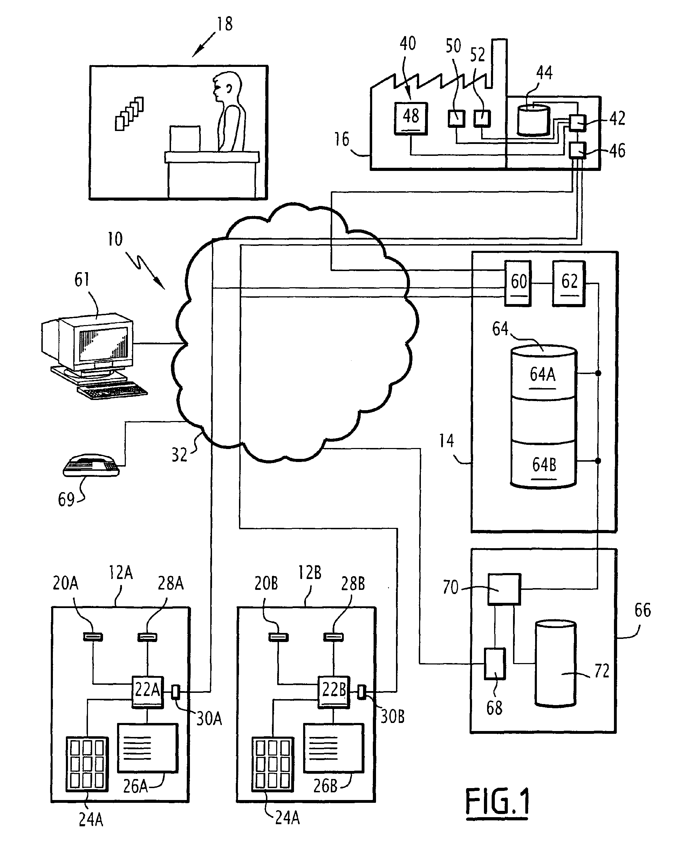

L'installation illustrée sur la figure 1 est destinée à la production de travaux photographiques pour des clients réglant ces prestations à partir de cartes de paiement dites prépayées.

L'installation permet la prise en compte de la commande du client, l'exécution de cette commande, la mise à disposition du client des travaux photographiques réalisés et le paiement de la prestation effectuée.

A cet effet, l'installation 10 comporte un ensemble de bornes de commande 12A, 12B, un serveur de gestion 14 et au moins un laboratoire central 16 de production des travaux photographiques, ainsi, éventuellement, qu'un ensemble de boutiques 18 de livraison des travaux photographiques et/ou de mise à disposition des cartes de paiement.

Avantageusement, les bornes de commande 12A, 12B sont installées dans des boutiques 18.

Les bornes de commande 12A, 12B sont réparties sur le territoire des clients potentiels. Seules deux bornes sont illustrées sur la figure 1 pour des raisons de simplification.

Chaque borne 12A, 12B comporte un ou plusieurs lecteurs 20A, 20B propres à recevoir un support de mémorisation d'images tel qu'un CD ROM, une carte mémoire d'un appareil photo numérique ou tout autre support de données sur lequel des images peuvent être mémorisées. Chaque borne comporte en outre une unité de traitement d'informations 22A, 22B à laquelle est relié le lecteur 20A, 20B ainsi qu'un clavier de sélection 24A, 24B et un écran 26A, 26B permettant la mise à disposition d'informations pour le client.

L'unité centrale de traitement d'informations 22A, 22B est reliée à un lecteur 28A, 28B pour la lecture d'une carte de paiement prépayée.

Chaque borne de commande comporte enfin une interface 30A, 30B de communication d'informations permettant le transfert de données entre la borne de commande, le laboratoire central de production 16 et le serveur de gestion 14 au travers d'un réseau notamment collectif de transmission d'informations 32 tel que le réseau téléphonique.

L'unité de traitement d'informations 22A, 22B est propre à mettre en oeuvre un algorithme permettant des opérations de commande de travaux photographiques et de règlement de celles-ci à partir d'une carte prépayée.

Plus précisément, l'algorithme mis en oeuvre permet la sélection d'images contenues sur un support de stockage lu par les moyens 20A, 20B et la sélection de certaines de ces images en vue de leur reproduction. Cette sélection est effectuée à partir du clavier 24A, 24B, les images étant choisies sur l'écran 26A, 26B.

En outre, l'algorithme mis en oeuvre permet, lors du paiement, la validation par le client d'instructions autorisant le débit de son compte, cette validation s'effectuant depuis le clavier 24A, 24B avec visualisation sur l'écran 26A, 26B. Pour la validation, un code confidentiel est saisi par le client et ce code est comparé à un code associé mémorisé sur la carte. Ce n'est qu'en cas de concordance des deux codes que la validation des instructions est effective.

Le laboratoire central 16 comporte une unité de production 40 de travaux photographiques, des moyens de traitement d'informations 42 reliés à l'unité de production 40 pour sa commande et pour recevoir des informations caractéristiques de la qualité des travaux photographiques effectués et/ou à effectuer. Il comporte en outre une base de données 44 permettant la mémorisation des travaux à effectuer ainsi que des informations concernant les travaux à effectuer et notamment la qualité de ces travaux.

Une interface de communication 46 assure la liaison du laboratoire central 16 et plus précisément de l'unité de traitement d'informations 42 au serveur de gestion 14 pour l'échange d'informations et à chaque borne de commande 12A, 12B.

L'unité de production 40 comporte une machine 48 de tirage d'images sur un support papier à partir notamment d'informations numériques reçues depuis une borne 12A, 12B. Elle comporte en outre une machine 50 de contrôle de la qualité des travaux photographiques produits par la machine 48. Les machines 48 et 50 sont reliées à l'unité de traitement d'informations 42.

En sortie de l'unité de production 40 sont prévus des moyens 52 d'impression d'une facture et notamment d'un montant total payé et débité sur le solde associé à la carte prépayée.

Le serveur de gestion 14 comporte en entrée une interface 60 de communication permettant la liaison aux moyens de traitement d'informations, à chacune des bornes 12A, 12B, au laboratoire central 16, et à un éventuel ordinateur 61 du client, par l'intermédiaire du réseau Internet et d'une interface adaptée.

Le serveur 14 comporte en outre une unité de traitement d'informations 62 reliée à des moyens de stockage 64 hébergeant une première base de données 64A contenant essentiellement des caractéristiques concernant l'état de commercialisation des cartes prépayées et une seconde base 64B comportant essentiellement des informations concernant les travaux photographiques en cours et le solde courant des différentes cartes en activité.

En outre, l'unité de traitement d'informations 62 du serveur est reliée à un serveur vocal 66 lui-même relié au réseau téléphonique par une interface 68 adaptée et permettant la communication avec les clients via un téléphone fixe ou mobile 69. Ce serveur vocal comporte une unité de traitement 70 et des moyens de stockage 72.

Chaque client voulant faire produire des travaux photographiques depuis l'installation dispose d'une carte prépayée qu'il achète dans une boutique 18. Cette carte est constituée d'un support tel qu'une carte en matière plastique équipée d'une mémoire de stockage d'un numéro de carte et d'un code confidentiel crypté.

Pour chaque carte acquise par un client, la base 64, et notamment la base 64B contient le numéro de carte, le code confidentiel associé à cette carte, le nom du porteur ainsi que son adresse de courrier électronique couramment désignée par adresse email. En outre, elle comporte le solde courant de la carte, c'est-à-dire une quantité exprimée en unités de compte et représentative, par exemple, d'un nombre de travaux photographiques pouvant être effectués. Cette quantité est par exemple quantifiée en nombre d'impressions d'un format donné.

Les serveurs 14 et 66 sont adaptés pour adresser sur requête une information concernant le solde courant d'une carte. Cette information peut être recueillie par le client depuis une borne 12A, 12B, un ordinateur personnel 61 connecté au serveur 14 au travers du réseau Internet, ou à partir d'un téléphone 69 en communication avec le serveur 66.

Pour ce faire, et comme connu en soi, chaque borne 12A, 12B, l'ordinateur 61 ou le téléphone 69 comporte des moyens de saisie ou de lecture du numéro de la carte, du code confidentiel associé à la carte, et des moyens pour transférer une demande vers le serveur concerné. En retour, ce serveur adresse à l'entité ayant formulé la requête le solde courant de la carte.

Enfin, et comme connu en soi pour les cartes prépayées, le solde courant de la carte peut être incrémenté, moyennant l'acquisition d'une carte recharge, dont le numéro, ainsi que le numéro de carte prépayée et le code confidentiel sont transmis simultanément vers le serveur 14. Cette opération conduisant à un rechargement de la carte peut être effectué depuis une borne 12A, 12B, depuis un ordinateur 61 ou depuis un téléphone 69.

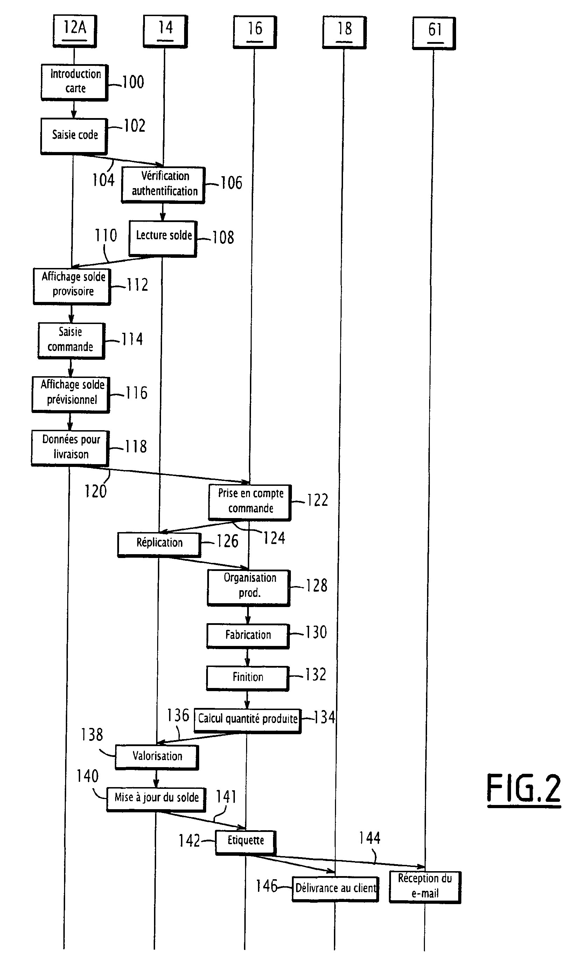

Sur la figure 2, est représenté le chronogramme des flux d'informations pour la production de travaux photographiques pour un client disposant d'une carte prépayée avec un solde suffisant. Le client est supposé utiliser la borne 12A.

Initialement, le client introduit sa carte prépayée dans le lecteur 28A, à l'étape 100, et saisit son code confidentiel, à l'étape 102, à partir du clavier 24A. Lors de l'étape 100, après introduction de la carte, l'unité de traitement d'informations 22A détermine le numéro mémorisé sur la carte. Le numéro de carte et le code saisi sont transmis, à l'étape 104, au serveur de gestion 14. Ce dernier authentifie la carte, à l'étape 106, en comparant le code confidentiel entré au code associé à la carte et mémorisé dans la base 64B.

Le serveur 14 détermine, à l'étape 108, le solde courant de la carte et retourne celui-ci à la borne de commande, à l'étape 110. Le solde ainsi retourné est affiché sur l'écran 26A de la borne, à l'étape 112.

A l'étape 114, le client saisit sa commande. A cet effet, il introduit le support de données sur lequel sont mémorisées les photographies dans le lecteur 20A. A partir d'une interface de choix, connue en soi, le client détermine les images dont il souhaite une impression, le nombre d'impressions et le format choisi pour ces impressions.

L'unité de traitement d'informations 22A détermine ainsi des données de commande à partir desquelles elle détermine le montant théorique à payer et commande l'affichage, à l'étape 116, du nouveau solde prévisionnel de la carte. Ce solde prévisionnel est égal au solde courant retourné à l'étape 110 diminué de la valorisation théorique de la commande calculée en supposant que tous les travaux commandés sont exécutés correctement. Ce solde prévisionnel est mémorisé temporairement dans la base 64B et les moyens de stockage 72. Le solde peut être communiqué au porteur de la carte sur requête depuis une borne 12A, 12B, un ordinateur 61 ou un téléphone 69.

A l'étape 118, le client saisit depuis le clavier 24A des données permettant la livraison des travaux imprimés, si celui-ci souhaite que ces travaux lui soient délivrés directement chez lui ou indique les coordonnées d'une boutique 18 dans laquelle il viendra retirer sa commande.

Les données de commande, les images numériques à imprimer et les données pour la livraison sont transmises à l'étape 120, vers le laboratoire central 16. A l'étape 122, ces données sont mémorisées dans la base 44 du laboratoire central. A l'étape 124, ces mêmes données sont transférées vers le serveur 14 et, à l'étape 126, une réplication de ces données sur la base 64B et la base du serveur vocal 66 est effectuée.

En fonction des données de commande, les moyens de traitement d'informations 42 du laboratoire planifient la production des impressions, à l'étape 128. La fabrication est ensuite effectuée à l'instant planifié, à l'étape 130, puis les travaux photographiques 132 sont contrôlés par la machine 50, lors d'une phase de finition. Les travaux photographiques dont la qualité est inférieure à un critère prédéterminé sont rejetés et sont considérés comme des travaux non effectués. A l'étape 134, les moyens de traitement d'informations 42 déterminent la quantité d'impressions réellement produite.

En variante, les images numériques sont contrôlées avant impression, et seules celles permettant d'obtenir une qualité minimale sont réellement imprimées.

A l'étape 136, cette quantité est retournée vers le serveur de gestion 14 qui, à l'étape 138, effectue une valorisation des seuls travaux réellement effectués. Un nouveau solde du compte de la carte du client est déterminé, à l'étape 140. Ce solde est égal au solde courant antérieur diminué du résultat de la valorisation effectuée à l'étape 138. Ainsi, le nouveau solde déterminé à l'étape 140 est inférieur ou égal au solde prévisionnel déterminé à l'étape 116.

A l'étape 141, le prix est transmis au laboratoire central 16 et, à l'étape 142, une étiquette faisant état des travaux exécutés et précisant le prix est imprimée et apposée sur l'emballage contenant les produits photographiques. Eventuellement, si requis par le client, un message de courrier électronique 144 l'informant de la fin des travaux d'impression est envoyé. Après quoi, les travaux, après avoir été transportés par tout moyen approprié sont délivrés au client, à l'étape 146, par exemple depuis une boutique 18.

Avec une telle installation, on comprend que, même si le paiement s'effectue a priori à partir d'une carte prépayée lors du passage de la commande, seul le montant correspondant à des travaux photographiques d'une qualité suffisante est effectivement décrémenté du solde de la carte. Ceci est rendu possible puisque la valorisation et la décrémentation du solde courant ne sont effectuées qu'après la production des travaux photographiques et examen de ceux-ci.

Toutefois, cette décrémentation du solde de la carte s'effectue sans qu'aucune intervention de la part d'un commerçant tenant la boutique ou du client ne soit effectuée, ce qui simplifie considérablement les opérations de paiement et limite les flux de données transmises.

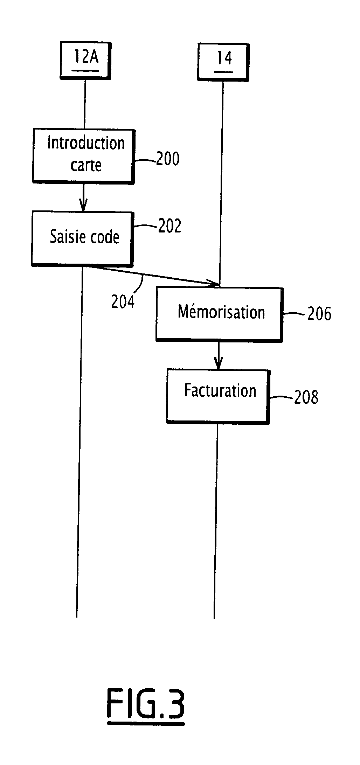

Le processus de vente des cartes et d'activation de celles-ci s'effectue comme illustré sur la figure 3.

Initialement, un lot de cartes, chacune associée à un code secret, est fabriqué. Les numéros de carte sont stockés dans la base 64A du serveur 14 ainsi qu'un identificateur de la boutique dans laquelle ces cartes sont entreposées. Lorsqu'un consommateur acquiert une carte dans une boutique, celui-ci en paie le prix, par exemple en espèce ou par carte bancaire.

Initialement, avant utilisation, la carte est associée à un numéro d'activation et à un code confidentiel. Le numéro d'activation et le code confidentiel qui peuvent être un seul et même code sont par exemple inscrits sur un coupon amovible initialement solidarisé à la carte lors de sa commercialisation.

Une fois en possession de cette carte, celle-ci est activée dans une borne de commande. A cet effet, elle est introduite dans le lecteur 28A de la borne, à l'étape 200, et le numéro de la carte est lu. Le code connu de l'acheteur est saisi, à l'étape 202, sur le clavier 24A. En outre, le client saisit son nom et son adresse électronique. Ces données sont transmises au serveur de gestion, à l'étape 204, Elles sont mémorisées dans la base 64A, à l'étape 206.

A l'étape 208, le serveur de gestion 14 effectue une opération de facturation de la boutique 18 en établissant un débit du prix de la carte.

A compter de la mémorisation, à l'étape 206, le porteur de la carte est à même de faire effectuer des travaux photographiques en réglant ceux-ci avec sa carte prépayée.

En variante, si un nombre de photographies d'une valeur supérieure au solde de la carte sont commandées, celles-ci sont exécutées et un reliquat est exigé du client lors de la livraison des photographies.

Suivant encore une variante, la commande est mise en attente jusqu'à ce que le solde de la carte soit suffisant.

## Revendications

1. Installation de production de travaux photographiques comportant :
- des moyens (24A, 26A, 28A, 24B, 26B, 28B) de recueil d'une commande et de production de données de commande,
- des moyens (16) de production des travaux photographiques à partir des données de commande,
**caractérisée en ce que** les moyens de recueil (12A, 12B) comportent des moyens (28A, 28B) d'identification d'un client passant commande,
**en ce que** les moyens (16) de production comportent des moyens (50) de détection des travaux photographiques ayant un niveau de qualité non satisfaisant ;
et **en ce qu'**elle comporte :
- une base de données (64) comportant un solde courant d'unités de compte pour chaque client;
- des moyens (62) pour effectuer, après production, une valorisation des seuls travaux photographiques exécutés avec un niveau de qualité satisfaisant ; et
- des moyens (62) pour décrémenter le solde courant du client identifié de la valorisation effectuée, seulement après exécution des travaux, et indépendamment de la commande recueillie.

2. Installation selon la revendication 1, **caractérisée en ce que** lesdits moyens d'identification d'un client comportent un support de données propre à chaque client et un lecteur (28A, 28B) de recueil de ces informations d'identification du client sur le support.

3. Installation selon la revendication 2, **caractérisée en ce que** ledit support de données est une carte à mémoire.

4. Installation selon l'une quelconque des revendications précédentes, **caractérisée en ce qu'**elle comporte au moins une borne (12A, 12B) dans laquelle sont intégrés les moyens (24A, 26A, 28A, 24B, 26B, 28B) de recueil d'une commande et de production de données de commande et les moyens (28A, 28B) d'identification du client passant commande.

5. Installation selon la revendication 4, **caractérisée en ce que** la ou chaque borne (12A, 12B) comporte un lecteur (20A, 20B) de recueil de données d'images numériques sur lesquelles doivent être effectués les travaux photographiques.

6. Installation selon l'une quelconque des revendications précédentes, **caractérisée en ce qu'**elle comporte un serveur de gestion (14) dans lequel sont intégrés la base de données (64) comportant un solde courant d'unités de compte pour chaque client, les moyens (62) pour effectuer une valorisation et les moyens (62) pour décrémenter le solde courant du client identifié de la valorisation effectuée.

7. Installation selon la revendication 6 et l'une des revendications 4 et 5, **caractérisée en ce que** la ou chaque borne (12A, 12B) et le serveur de gestion (14) comportent des moyens (30A, 30B, 60) de communication au travers d'un réseau collectif de transmission de données (32).

8. Installation selon l'une quelconque des revendications précédentes, **caractérisée en ce qu'**elle comporte des moyens (61, 69) de consultation de la base de données (64) pour l'obtention du solde courant de chaque client.

9. Installation selon l'une quelconque des revendications précédentes, **caractérisée en ce qu'**elle comporte :
- des moyens (62) de calcul d'une valorisation théorique de la commande, et
- des moyens pour décrémenter le solde courant de la carte de ladite valorisation théorique pour obtenir un solde prévisionnel après recueil de la commande et avant production effective des travaux photographiques.
